# EUROPEAN PATENT APPLICATION

(11) **EP 4 529 130 A1**
(43) Date of publication of application: **26.03.2025**
(21) Application number: 24202341.4
(22) Date of filing: 24.09.2024
(51) Int. Cl.: H04L 65/612, H04N 21/262, H04N 21/81

(54) **TWO-STEP MEDIA CONTENT RESOLUTION**

(30) Priority: 25.09.2023 US 202318474095
(71) Applicant: Spotify AB, 111 53 Stockholm (SE)
(72) Inventor: LA CAMERA, Paolo, 111 53 Stockholm (SE); LINDSTRÖM, Erik Johan Curcio, 111 53 Stockholm (SE)
(74) Representative: Ström & Gulliksson AB

(57) **Abstract**

A method and system for resolving media content is disclosed. In some embodiments, the method includes requesting a manifest file for a media item identifier. The manifest file may be generated by a backend platform. The manifest file may include, among other things, a uniform resource locator (URL) that corresponds to a location of media content for the media item and a latency to generate the media content. The method further includes determining a time to request the media content from a content distribution network based at least in part on a time to play the media content and the latency time to generate the media content. The media playback device may request and play the media content.

## Description

### BACKGROUND

A media service provider may use generated media content in various applications. However, there are technical challenges related to generated media content. One such challenge is that generating media content takes time, resulting in a delay between requesting the generation of media content and receiving the generated media content. Similarly, generating media content may, in some instances, be a computationally expensive process. Moreover, the time and resources required to generate media content may vary from one media item to the next, depending on the type of media content, network conditions, and other factors. For at least these reasons, it may be challenging for a media service provider to effectively integrate generated media content into some applications.

### SUMMARY

In general terms, aspects of the present disclosure relate to a method and system for resolving media content. In some embodiments, a manifest file may be generated for a media item. The manifest file may include, among other things, a uniform resource locator (URL) that corresponds to a location of media content for the media item. Based at least in part on a latency time to generate the media content, a media playback device may determine a time to request the media content ahead of the playback itself. The media playback device may then request and play the media content.

In a first aspect, a method for generating media content is disclosed. The method comprises sending a request to generate a manifest file associated with a media item; at a first time, receiving the manifest file associated with the media item, the manifest file including a uniform resource locator associated with media content for the media item and a latency to generate the media content; determining a second time based at least in part on the latency to generate the media content; at the second time, using the uniform resource locator to request the media content from a content distribution network; receiving, from the content distribution network, the media content; and playing the media content using a media playback device.

In a second aspect, a system for generating media content is disclosed. The system comprises a backend platform; a media playback device; and a content distribution network; wherein the media playback device is configured to: send a request to the backend platform to generate a manifest file associated with a media item; at a first time, receive, from the backend platform, the manifest file associated with the media item, the manifest file including a uniform resource locator associated with media content for the media item and a latency to generate the media content; determine a second time based at least in part on the latency to generate the media content; at the second time, use the uniform resource locator to request the media content from the content distribution network; receive, from the content distribution network, the media content; and play the media content using a media playback device.

In a third aspect, a media playback device is disclosed. The media playback device comprises a processor; and memory storing instructions that, when executed by the processor, cause the media playback device to: receive a sequence of media items including a generatable media item; at a first time, send a request to generate a manifest file associated with the generatable media item; receive the manifest file associated with the generatable media item, the manifest file including a uniform resource locator associated with media content for the generatable media item and a latency to generate the media content; determine a second time based at least in part on the latency to generate the media content; at the second time, use the uniform resource locator to request the media content from a content distribution network; receive, from the content distribution network, the media content; and output the media content.

### BRIEF DESCRIPTION OF THE DRAWINGS

FIG. 1 illustrates an example network environment in which aspects of the present disclosure may be implemented.
FIG. 2 is a flowchart of an example method for coordinating generation of media content.
FIG. 3 illustrates a schematic diagram of example data.
FIG. 4 illustrates a schematic timeline of operations for coordinating the generation of media content.
FIG. 5 is a flowchart of an example method performed by a backend platform.
FIG. 6 illustrates a block diagram of an example architecture of a backend platform.
FIG. 7 is a flowchart of an example method performed by a content distribution network.
FIG. 8 is a block diagram of an example computing system.

### DETAILED DESCRIPTION

Various embodiments will be described in detail with reference to the drawings, wherein like reference numerals represent like parts and assemblies throughout the several views. Reference to various embodiments does not limit the scope of the claims attached hereto. Additionally, any examples set forth in this specification are not intended to be limiting and merely set forth some of the many possible embodiments for the appended claims.

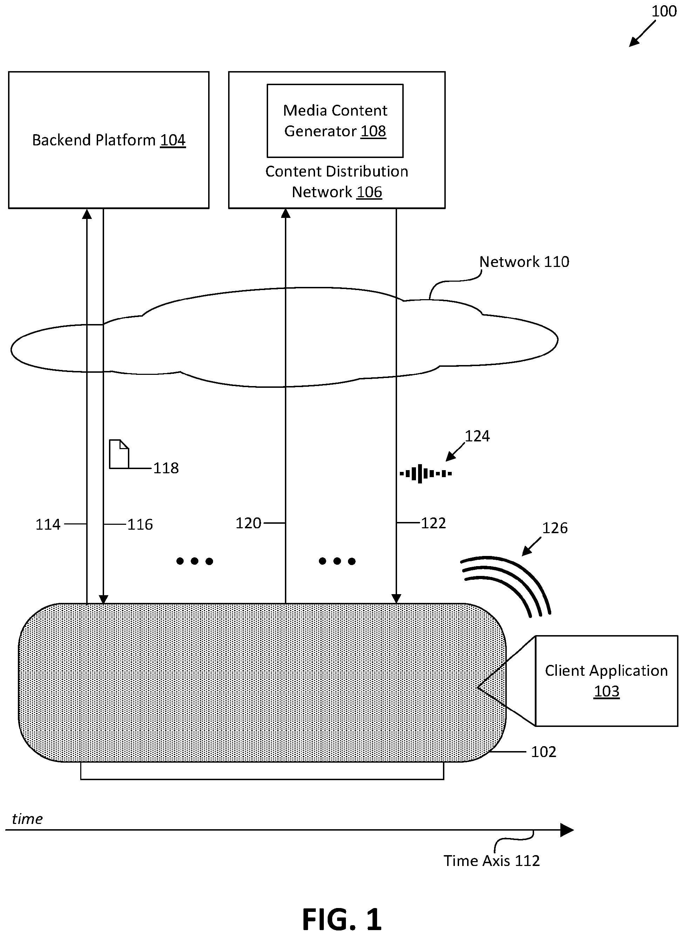

FIG. 1 illustrates an example network environment 100 that includes components for generating media content. Depending on the embodiment, the components of the environment 100 may vary, and there may be more or fewer components than those illustrated in FIG. 1. Furthermore, one or more of the components may include a plurality of subcomponents. In the example of FIG. 1, The environment 100 includes a media playback device 102, a backend platform 104, a content distribution network (CDN) 106, a media content generator 108, and a network 110. Furthermore, the elements 112-126 illustrate an example use of components of the environment 100.

The media playback device 102 may be a computing device, such as a smartphone a desktop or laptop computer, a smart watch, a smart television, a smart speaker, or another computing device. The media playback device 102 may be remote from the backend platform 104 and the CDN 106. For example, the media playback device 102 may access the backend platform 104 and the CDN 106 over the internet. The media playback device 102 may include a client application 103 that is installed on thereon or that is accessible by a program (e.g., a web browser) installed on the media playback device 102. In some embodiments, functions and components of the media playback device 102 may be separated into two or more computer systems.

The client application 103 may be a client-side application of a distributed digital media service and may be coupled with a server-side application that is integrated with the backend platform 104 and the CDN 106. Depending on the characteristics of the media playback device 102, characteristics of the client application 103 may vary. For example, the client application 103 may be a mobile application, a web browser, firmware, or another type of application. In some embodiments, the client application 103 is developed by-or otherwise associated with-an entity (such as a media service provider) that develops or controls the backend platform 104 or the CDN 106.

In some embodiments, the client application 103 may include a plurality of features. For example, the client application 103 may include an interface for interacting with the backend platform 104 and the CDN 106. Additionally, the client application 103 may include a feature for determining a time at which to play a media item and for handling the timing at which media content is retrieved from the CDN 106. Furthermore, the client application 103 may be configured to play media content.

In some embodiments, the client application 103 may include a media player API for playing media content. In examples, the media player API is called to play media content on the media playback device 102. For example, the media player API may be a rendering stack that is embedded in the media playback device 102. In some embodiments, the media player API is defined to receive a media item identifier for a media item, such as a uniform resource identifier (URI) or a uniform resource locator (URL). The media player API may be configured to use the media item identifier to retrieve media content from the CDN 106. The media content may be content that is generated by the CDN 106 or a component coupled with the CDN 106 (e.g., the media content generator 108). The media content may be a stream of data that represents a media item and that can be played by the media playback device 102. The media content may be a media file, the format of which may vary depending on the type of media (e.g., audio, visual, audio-visual, etc.) or depending on the characteristics of the media playback device 102.

The backend platform 104 may be a collection of software, hardware, and networks. Among other things, the backend platform 104 may be configured to receive a request to play a media item or a sequence of media items. The request may be sent from the media playback device 102 or another device coupled with the backend platform 104, such as a controller device that is casting media for playback on the media playback device 102. In some embodiments, the request may include information about the device that is to play the sequence of media items (e.g., the media playback device 102). Such information may include capabilities of the media playback device 102, such as file types that can be played by the media playback device 102.

Among other things, the backend platform 104 may determine a media item for the media playback device 102 to play and may generate a manifest file that includes a URL associated with media content for the media item. In some embodiments, the backend platform 104 may receive a request to generate a manifest file for a media item. The manifest file may include a URL that may be used by the media playback device to retrieve media content for the media item. In some embodiments, following the URL of the manifest file may lead to an endpoint of the CDN 106.

The content distribution network (CDN) 106 may be a collection of servers and databases. The servers may include endpoints to receive calls from programs requesting content. In some embodiments, the endpoints may retrieve, in response to receiving a request, the requested content from databases (e.g., a cache or another storage system) and return the requested content to the calling program. In some embodiments, the CDN 106 may stream media content to calling programs. In some embodiments, the CDN 106 may make media content files available to download by programs that call the CDN 106. In some embodiments, the CDN 106 may include-or be communicatively coupled with-a media content generator 108.

The media content generator 108 may be, for example, a text generator, a speech generator (e.g., a text-to-speech generator), an image generator, or a video generator. In some embodiments, the media content generator includes one or more generative artificial intelligence models (e.g., a deep neural network configured to output one or more of text, speech, or visual information). In some embodiments, the CDN 106 may receive a request from a calling program and may use the media content generator 108 to generate a response.

The network 110 may be, for example, a wireless network, a virtual network, the internet, or another type of network. Additionally, the network 110 may be divided into subnetworks, and the subnetworks may be different types of networks.

The elements 112-126 illustrate an example use of components of the environment 100.

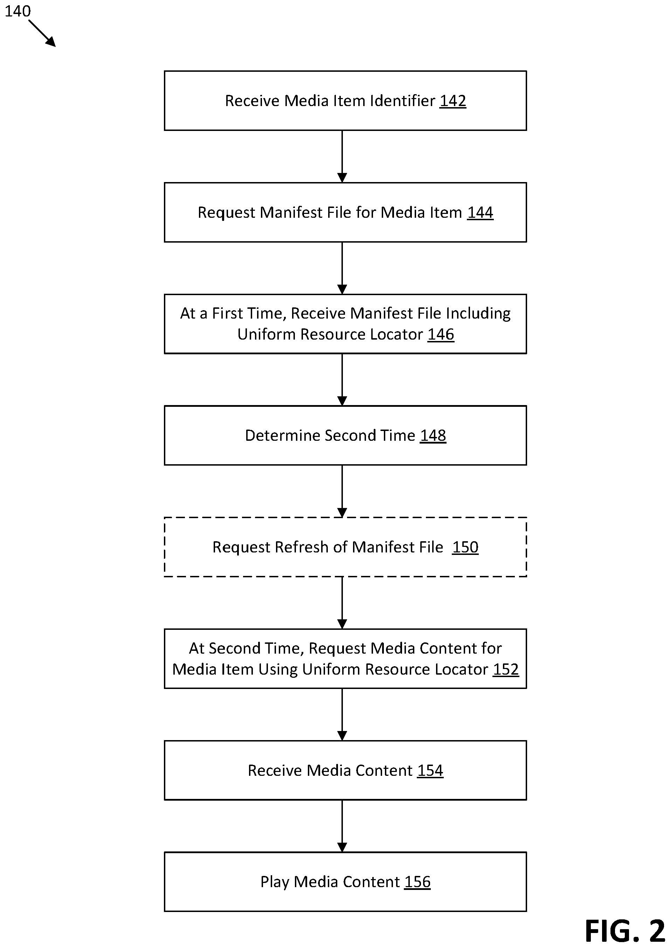

The time axis 112 illustrates a passage of time going from a left side to a right side for the operations 114, 116, 120, 122, and 126. Thus, according to the time axis 112, the operation 114 occurs prior to the operation 116, for example, and the operation 116 occurs prior to the operation 120, for example. The time axis 112 is illustrated for example purposes. For example, the time axis 112 may not be to any particular scale and may only illustrate a relative ordering of the operations 114, 116, 120, 122, and 126 in the example of FIG. 1. The example operations of FIG. 1 are further described below in connection with FIG. 2. Although operations of FIG. 1 are described as being performed by the media playback device 102, one or more of the operations may be performed by, for example, the client application 103 or another component of FIG. 1.

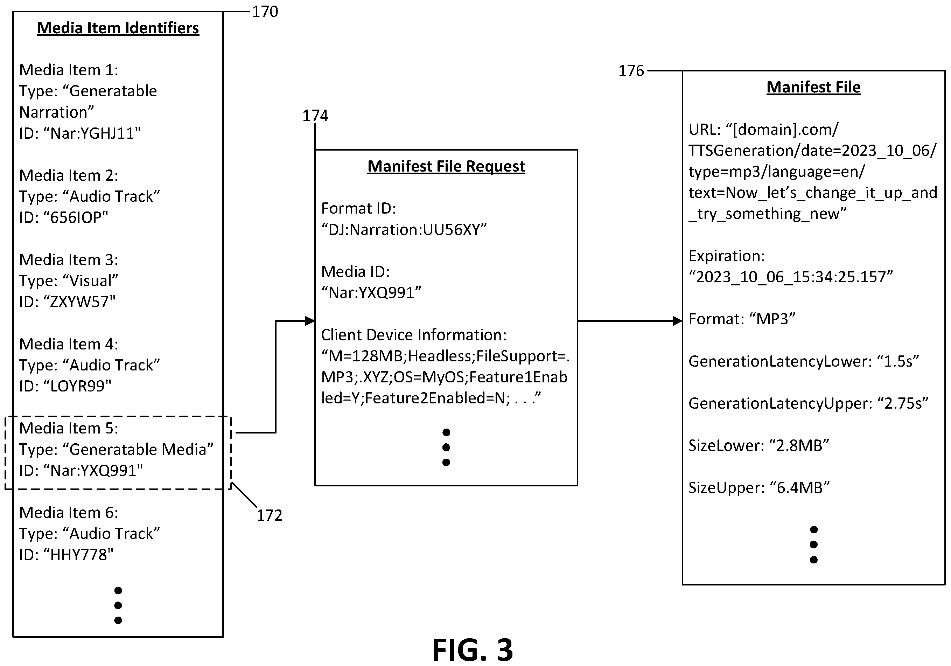

At operation 114, the media playback device 102 may send a request to the backend platform 104 to generate a manifest file associated with a media item. The media item may be a generatable media item, such as synthesized audio, generated video, generated text, or another type of media that may be generated. To request the manifest file, the media playback device 102 may provide a manifest file request, an example of which is illustrated and described below in connection with FIG. 3. The manifest file request may include, for example, a value for identifying a backend service of the backend platform 104 to generate the manifest file, a media item identifier, and client device information, which may relate to capabilities of the media playback device 102. An example manifest file request and the fields of the manifest file request are illustrated and described below in connection with FIG. 3.

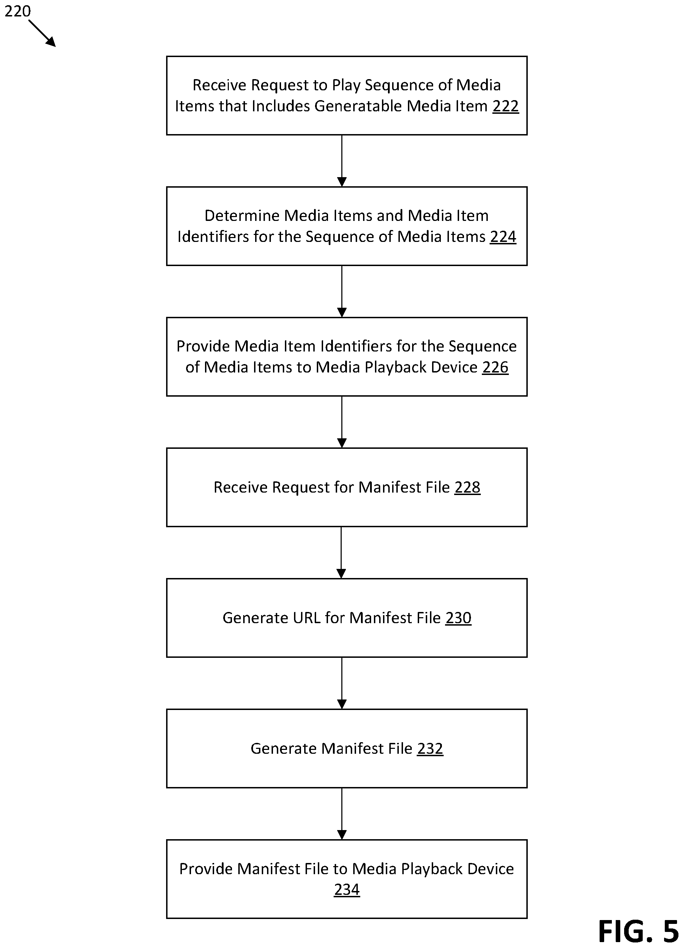

Having received the request for the manifest file, the backend platform 104 may generate the manifest file. Aspects of generating a manifest file are described below in connection with FIGS. 5-6.

At operation 116, the media playback device 102 may receive, from the backend platform 104, a manifest file 118. The manifest file 118 may, in some embodiments, be a structured data object. Among other things, the manifest file 118 may include a URL associated with media content of a media item. In some embodiments, the manifest file 118 may further include a latency time for generating the media content, a size of the media content, an expiration time for the URL, or other information. In some embodiments, the manifest file 118 may include a plurality of URLs, each of which may correspond to different media content for the media item. An example manifest file is further illustrated and described below in connection with FIG. 3.

After receiving the manifest file 118 for the media item, the media playback device 102 may determine a time at which media content for the media item is to be requested from the CDN 106. The time at which the media content is requested may, in some embodiments, depend on one or more of a time at which the media content is to be played, a latency time to generate the media item, a buffer time, a network strength, a capability of the media playback device 102, or another factor. As illustrated by the example of FIG. 1, there may be a delay between the time at which the media playback device 102 receives the manifest file 118 and the time at which the media playback device 102 requests the media content. Determining the time at which to request the media content is further described below in connection with FIG. 2.

At operation 120, the media playback device 102 may request media content from the CDN 106. For example, the media playback device 102 may follow a URL of the manifest file 118 to the CDN 106, and a path or parameter of the URL may lead to an endpoint of the CDN 106.

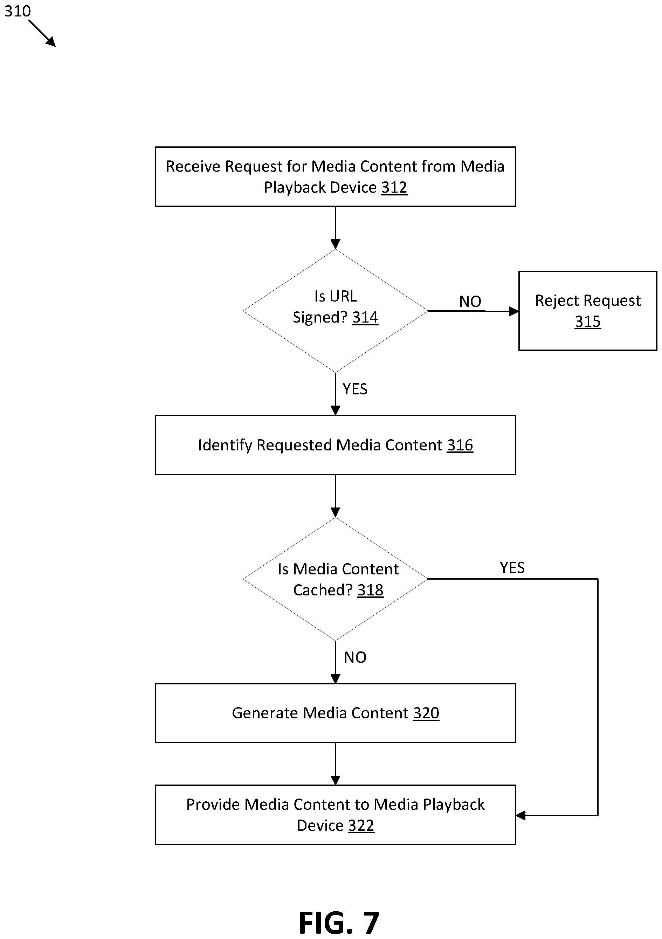

The CDN 106 may receive the request for media content from the media playback device 102. In response, the CDN 106 may, for example, retrieve or generate the media content. Example operations of the CDN 106 in response to receiving a request for media content are described below in connection with FIG. 7. In some instances, there may be a delay between the time at which the CDN 106 receives the request for media content and the time at which the CDN 106 provides the media content to the media playback device 102, as illustrated by the example of FIG. 1.

At operation 122, the media playback device 102 may receive media content 124 from the CDN 106. The media playback device 102 may then, at the operation 126, play the media content 124. Advantageously, as is further described below, the media playback device 102 may coordinate the timing at which the media content 124 is requested and received from the CDN 106 so that unnecessary use of computational resources is minimized, while also ensuring that the media playback device 102 can access the media content 124 when it is time to play the media content 124. In some embodiments, this coordination is enabled by data of the manifest file 118, which may be relatively inexpensive and fast to generate, as is further described below.

FIG. 2 is a flowchart of an example method 140 for coordinating generation of media content. Operations of the method 140 are described as being performed by the client application 103 on the media playback device 102. However, depending on the embodiment, the component performing an operation of the method 140 may vary and an operation may be performed by a different component than described herein. For example, at least some operations of method 140 may be performed by another component of the media playback device 102 or by a component of the backend platform 104. The method 140 is described in the context of a single media item. However, as will be understood by those having skill in the art, aspects of the method 140 may be performed for a plurality of media items.

At operation 142, the client application 103 may receive a media item identifier. For example, the backend platform 104 may receive a request to play a media item or a sequence of media items, as described below in connection with FIG. 5. In response to the request, the backend platform 104 may, in some instances, select one or more media items. Further, the backend platform 104 may determine or select one or more media item identifiers for the one or more selected media items. The backend platform 104 may then provide the one or more media item identifiers to the client application 103. In some embodiments, the one or more media item identifiers may be received by a component that is communicatively coupled with the client application 103, but which is part of the backend platform 104.

There may be various types of media items. For example, a media item may be an audio item, such as a music track, a podcast, an audio book, an audio narration, or another type of audio item. As other examples, a media item may be text, one or more images, a video, an audio-visual item, or another type of media item.

A media item may be associated with media content. Media content may be data associated with the media item that may be played or rendered by a media playback device. For example, if a media item is a music track, then the media content for that media item may be MP3-formatted data for the music track. In some instances, a media item may be associated with different media content. For example, if a media item is a music track, then the first media content for the media item may be MP3-formatted data for the music track and a second media content for the media item may be WAV-formatted data for the music track. As another example, a media item may be associated with different media content that relates to different quality or fidelity versions of the media item. As another example, a media item may be associated with different media content that relate to different aspects of the media item (e.g., a first media content may include data for a first half of the media item, while a second media content may include data for a second half of the media item).

A media item identifier for a media item may be an alphanumeric string that includes data about the media item. For example, the media item identifier may be a key or hash for looking up the media item in a database. As another example, the media item identifier may include metadata or other information about the media item. For example, if the media item is a music track, then the media item identifier may include a name of the music track, a creator of the music track, or other data related to the music track. As another example, if the media item is a narration of other media items (e.g., of a sequence of media items), then the media item identifier may include data pertaining to the other media items. As another example, the media item identifier may include contextual data, such as data related to a user that submitted a request or other data related to the context in which the playback request was submitted. In some embodiments, information contained in the media item identifier may be encoded.

At operation 144, the client application 103 may request a manifest file for the media item. In some embodiments, the client application 103 may determine whether the media item identifier may be resolved into media content. In some embodiments, for some media items (e.g., pre-recorded audio), the media content for the media item can be retrieved using the media item identifier. However, in some instances, the client application 103 may be unable to resolve some media items (e.g., generatable media items). For such media items, the client application 103 may request data from the backend platform 104 that may be resolved by the client application 103. To do so, the client application 103 may, in some instances, request a manifest file for the media item.

To request the manifest file, the client application 103 may call a function of the backend platform 104 for generating a manifest file. In some embodiments, the client application 103 may provide a manifest file request to the backend platform 104. The manifest file request may include one or more of a format identifier, the media item identifier, or client device information.

The format identifier may be a string that identifies a service of the backend platform 104 that may be used to generate the manifest file. The backend service used to generate the manifest file may depend at least in part on the media item's type or may depend on whether the media item is part of an application. For example, the backend platform 104 may include a service for generating manifest files for media items that are narration media items (e.g., as part of a DJ feature).

The media item identifier of the manifest file request may, in some instances, be the same media item identifier received by the client application 103 from the backend platform 104 (e.g., at the operation 142). As described in connection with the operation 142, the media item identifier may include information about the media item. In other instances, the media item identifier in the manifest file request may be related to but different from the media item identifier received from the backend platform 104. In some instances, the media item identifier of the manifest file request may be distinct from the media item identifier received from the backend platform 104.

The client device information of the manifest file request may include information about the device that is to play the media item (e.g., the client application 103). For example, the client device information may include one or more of the following: one or more file types playable by the client device; a playable bit rate; a playable sample rate; whether the client device has a screen, and if so, a size of the screen; an operating system; whether a software feature is installed on or enabled in the client device; information related to device hardware; or other information related to the device.

At operation 146, the client application 103 may receive a manifest file including a URL. The client application 103 may receive the manifest file at a first time. The first time may be a time (or timestamp) that is prior to the second time, which is further described below. In some instances, the first time is the time at which the client application 103 requests the manifest file (e.g., the operation 144). The manifest file may be received from the backend platform 104. In some embodiments, the time required to receive the manifest file (e.g., a delay between the operations 144 and 146) may be less than a 1 second or less than 500 milliseconds, or less than 50 milliseconds. That is, receiving a manifest file may be significantly faster (e.g., at least a second, and in some instances, multiple seconds) than receiving generated media content, a process that is further described below.

The manifest file may include one or more of a URL, an expiration of the URL, a media content format, a latency for generating media content, a size of the media content, or other data related to the media content.

In some embodiments, a domain or path of the URL leads to an endpoint of the CDN 106. In some embodiments, parameters of the URL may include one or more of the following: text to be spoken that may be used to generate synthesized speech; a parameter for synthesizing speech, such as a selected voice or a sound quality; a date; a language; or other information that may be related to generating a media item. In some embodiments, the URL is signed so that a downstream system may verify that the URL is generated by the backend platform 104 and has not been altered. The expiration of the URL may indicate an amount of time (or a time until) the URL may be used. In some embodiments, a URL expires a predetermined amount of time after it is generated (e.g., a URL may expire 5 minutes after being generated).

In some embodiments, the URL leads to media content that is playable by the client application 103 and the media playback device 102. For example, a media item (e.g., a music track or a generatable media item) may have a first version in a first file format and a second version in a second file format, and the media playback device 102 may only be configured, for example, to play the second file format. Based on the characteristics of the media playback device provided to the backend platform 104, the URL in the manifest file may correspond with the second version.

In some embodiments, the manifest file may include a plurality of URLs, each of which may correspond with different media content for the media item. For example, a first URL of the plurality of URLs may correspond with media content representing the media item that has a first media content quality, a second URL of the plurality of URLs may correspond with media content representing the media item that has a second media content quality, and the first media content quality may be higher (e.g., have a higher resolution or fidelity) than the second media content quality. When multiple URLs are provided in the manifest file, the client application 103 may select from among the plurality of URLs when requesting media content (e.g., based on network conditions, on a setting in the client application, or based on other considerations).

The latency for generating the media content may be an amount of time for a media content to generate the media content. In some embodiments, the latency may be a prediction that is based at least in part on historical data related to previously generated media content that has characteristics similar to the media content. In some embodiments, there may be a range of latency times, such as a lower estimate and a higher estimate. The size of the media content may correspond to a file size of the file that includes the file. In some embodiments, the size may correspond to an amount of data required to transfer the media content from one computer system to another (e.g., the amount of data streamed from the CDN 106 to the client application 103). In some embodiments, there may be a range of sizes, such as a lower estimate and a higher estimate.

At operation 148, the client application 103 may determine a second time. The second time may be a time at which the media playback device 102 requests media content for the media item. The second time may occur after the first time. In some embodiments, the client application 103 may determine the second time by determining a time to play the media content, determining a buffer time, and then subtracting, from the time to play the media item, the buffer time and the latency to generate the media content, as determined from the manifest file.

The time to play the media content may be determined in various manners. For instance, the media content may be scheduled (e.g., by a user using a feature of the client application 103 or by the backend platform 104) to play at a certain time. As another example, the media item associated with the media content may be one of a plurality of media items that are to be played by the client application 103. Based on the media item's position within an order of the plurality of media items, the client application 103 may determine a time to play the media item. For example, if there are three media items, which have a combined play time of 10 minutes, that are to be played prior to the media item, then the client application 103 may determine that the time to play the media content is in 10 minutes. Based on this determination, the client application 103 may derive a time of day or datetime at which the media item is to be played. In some embodiments, the time to play the media content may be dynamically updated (e.g., if a media item is skipped or added in a play queue in front of the media content).

The buffer time may be an amount of time prior to the play time for having access to the media content. As an example, the buffer time may be 1 second. Thus, if the time to play the media item is 12:07:34, then based on the buffer time, the client application 103 may be configured to try to have access to the media content (e.g., have the media content downloaded locally or have access to the media content on a server) at 12:07:33, which is one second prior to the play time. By having a buffer time, the client application 103 may ensure that the media content is playable at the play time, even if there are delays, for example, in generating or locating the media content. The length of the buffer time may depend on various factors, including, for example, the type of the media content or characteristics of a currently running application. In some embodiments, the length of the buffer time may vary from one media content to the next, whereas in other embodiments, the buffer time may be constant. In some embodiments, the buffer time dynamically changes based on network conditions (e.g., whether a network connection is constant or interrupted). In some embodiments, the buffer time may be pre-defined by an engineer or administrator of the client application 103.

The latency time to generate the media content may be a predicted amount of time to generate the media content. The latency time may be read from the manifest file received from the backend platform 104 (e.g., at the operation 146). As described above, the manifest file may include a plurality of latency times. In some embodiments, the client application 103 may select a latency time representing an upper bound, or a highest predicted latency time. In some embodiments, the client application 103 may select a middle or an average value of a plurality of latency times. In some embodiments, the client application 103 may select a lower bound for the latency time. In some embodiments, the manifest file may include a plurality of URLs corresponding to different media content for the media item, and each of the plurality of URLs may correspond with a latency time. In such instances, the latency time selected by the client application 103 may correspond with the selected URL.

In some embodiments, determining the second time may also include accounting for a network connection of the media playback device 102. Based on the network connection, the client application 103 may further alter the time to request the media content from the CDN 106. For example, in response to determining that the media playback device 102 has a poor connection to the internet, the client application 103 may subtract additional time from the play time, thereby requesting the media content earlier than if the network connection was not poor. To determine the network connection, the client application 103 may, in some embodiments, determine a location of the media playback device 102 and determine an average or expected internet speed for that location (e.g., a device near an urban center may be expected to have a faster internet connection speed than a device in a rural area, or a device in a first country may be expected to have a faster internet connection speed than a device in a second country). In some embodiments, the client application 103 may read the quality of the network connection from another application of the media playback device 102.

At operation 150, the client application 103 may request a refresh of a manifest file. For example, as described above in connection with the contents of the manifest file, the manifest file may include a URL expiration. Based on the URL expiration, the client application 103 may determine, based on a URL's expiration, whether the URL is valid, and if so, the client application may request a refresh of the manifest file. If the URL is not expired, however, then the client application 103 may not need to request a refresh of the URL, as indicated by the dashed lines around the operation 150 of FIG. 2.

To request a refresh of the manifest file, the client application 103 may provide a refresh request to the backend platform 104, and the backend platform 104 may provide an updated manifest file with a URL that is not expired. In some embodiments, the URL in the updated manifest file may be the same URL as the URL in the previous manifest file, except that the URL in the updated manifest file may not be expired. In other embodiments, however, the updated URL may be different from the previous URL. In some embodiments, the client application 103 may determine that a URL is expired (even if it is not currently expired) if it will be expired at the time at which it is to be used to request media content (e.g., if the URL will have expired prior to the second time).

At operation 152, the client application 103 may request, at the second time, the media content for the media item using the URL. For example, the client application 103 may execute an HTTP GET request using the URL or cause another application of the media playback device 102 to execute an HTTP GET request using the URL. In some embodiments, the URL is defined such that, when followed, an endpoint of the CDN 106 is contacted. Based on a path or parameter of the URL, the CDN 106 may determine the media content requested by the client application 103. The CDN 106 may retrieve the media content (e.g., from a cache or a data storage system) or the CDN 106 may generate the media content, processes that are further described below in connection with FIG. 5. The CDN 106 may then provide the media content to the client application 103.

At operation 154, the client application 103 may receive the media content from the CDN 106. For example, the client application 103 may download or stream the media content from the CDN 106.

At operation 156, the client application 103 may play the media content. For example, the client application 103 may play the media content at a time determined by a playback queue or at a scheduled time to play the media content. The manner of playing the media content may vary depending on a media type of the media content. For example, if the media content is audio data, then the client application 103 may output the audio data via a speaker of the media playback device 102. As another example, if the media content includes text data or visual data, then the client application 103 may output the media content by displaying or rendering the media content on a screen of the media playback device 102.

FIG. 3 illustrates example data files described in connection with FIGS. 1-2. FIG. 3 includes media item identifiers 170, a manifest file request 174, and a manifest file 176.

The media item identifiers 170 illustrate examples of media item identifiers that may be received by the media playback device 102. As described below in connection with

FIGS. 5-6, the media item identifiers may be selected or generated by the backend platform 104. In some embodiments, the media item identifier 170 may represent a sequence of media items that are to be played by the client application 103. In some embodiments, the client application 103 may resolve one or more of the media item identifiers to retrieve playable media content.

In some instances, the client application 103 (or another component of the media playback device 102) may be unable to use the media item identifier for one or more of the media item identifiers to retrieve media content for the corresponding media item. For example, the client application 103 may be unable to use the media item identifier for the media item 172, and as a result, the client application 103 may generate the manifest file request 174 and provide the manifest file request 174 to the backend platform 104 to retrieve a media item identifier (e.g., a URL) that is usable by the client application 103 to retrieve media content.

In the example shown, the manifest file request 174 includes a format ID, a media ID, and client device info. As described above in connection with the operations 142-144, the client application 103 may generate the manifest file request 174 and provide it to the backend platform 104. The format ID may indicate a service of the backend platform that is to generate the manifest file, the media ID may include information about the media item (e.g., encoded information), and the client device information may include information about the client device that is to play the media content associated with the media item 172.

In the example shown, the manifest file 176 may be generated by the backend platform 104. In the example shown, the manifest file includes, for the media item 172, a URL, an expiration date, a format, a range of generation latency times, and a range of sizes. As shown, the URL may include information that is usable by the media content generator 108 as part of generating media content for the media item 172. In the example shown, the URL includes narrations text (e.g., "Now let's change it up and try something new") that may be synthesized into audio data by the media content generator 108. The narration text may relate to other media items in a sequence of media items. Another example of narration text may be for example, "That was your favorite track last year. Now let's play something from the *Jumping Kangaroo,* a new artist I think you will like." In some embodiments, however, the URL does not include the narration text nor other information around the narration text in the URL itself.

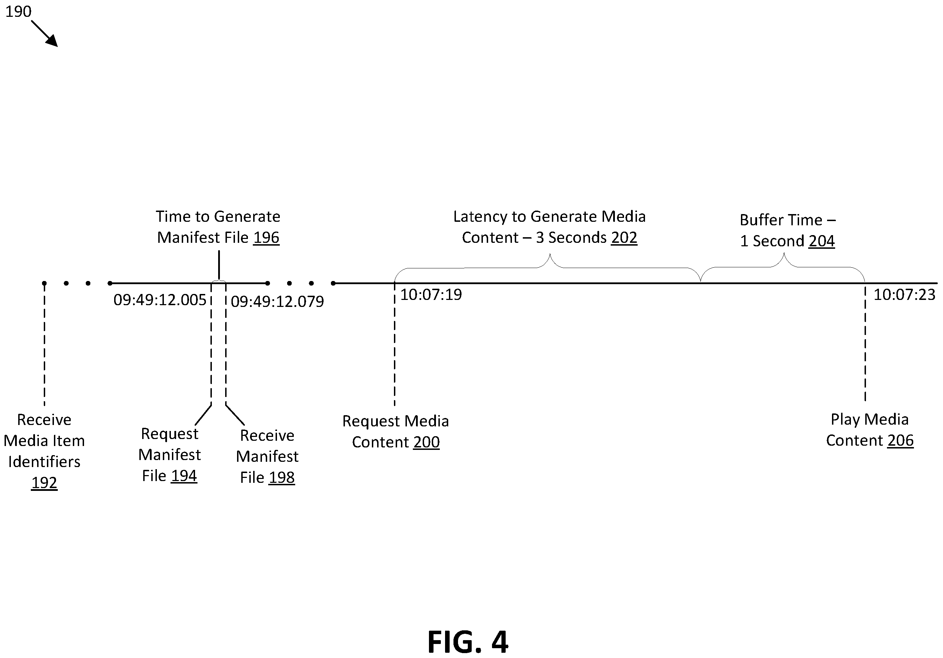

FIG. 4 is a schematic diagram of a timeline including example operations of the client application 103. Each of the operations 192, 194, 198, 200, and 206 of FIG. 4 are described above in connection with FIG. 2. The example of FIG. 4 illustrates a schematic representation of the ordering and timing of operations of FIG. 2. The illustrated times are for example purposes, and as will be understood by those having skill in the art, each of the time required to generate the manifest file, the latency time, and the buffer time may vary depending on implementation details and other factors.

At operation 192, the client application 103 may receive media item identifiers. In the example of FIG. 4, one or more of the media item identifiers may correspond with generatable media content, and the example of FIG. 4 is described in the context of a media item identifier corresponding to generatable media content. After receiving the media item identifiers, the client application 103 may, in some embodiments, wait to request a manifest file for the media item. In other embodiments, however, the client application 103 may not wait prior to requesting a manifest file for the media item.

At operation 194, the client application 103 may request a manifest file for the media item, and at operation 198, the client application 103 may receive the manifest file. As shown by the element 196, the time between requesting the manifest file and receiving the manifest file is 79 milliseconds. That is, the time required to generate the manifest file may be less than or equal to 79 milliseconds.

In the example shown, the client application 103 may determine that a time to play the media content for the media item is at 10:07:23. For example, as described above in connection with FIG. 2, the client application 103 may determine that, based on information from a play queue or based on a scheduled play time, the play time for the media content is at 10:07:23. Furthermore, as illustrated by the element 204, the client application 103 may determine that a buffer time is 1 second. Furthermore, as illustrated by the element 202, the client application 103 may determine that a latency time to generate the media content for the media item is 3 seconds. By subtracting the buffer time and the estimated latency from the play time, the client application 103 may determine that the time to request the media content is 4 seconds prior to the playtime. Thus, at operation 200, at 10:07:19, the client application 103 may request the media content, and at operation 206, the client application 103 may play the media content.

The example of FIG. 4 illustrates some advantages and benefits of aspects of the present disclosure.

For example, in some instances, the client application 103 may receive the manifest file for the media item but then never play media content for the media item. For example, if the media item belongs to a sequence of media items, a user of the client application 103 may elect to skip the sequence of media items. As another example, the user may stop using the client application 103, select different media, or power off the media playback device 102. As illustrated by the example of FIG. 4, however, the time to generate the manifest file for the media item may be substantially less than the time to generate the media content for the media item. Furthermore, the computation resources (e.g., memory, processor, and battery usage) may be substantially less for generating the manifest file than for generating the media content. When compared to generating media content, generating the manifest file may be a relatively cheap computational operation, meaning that generating the manifest file for a media item but then never playing the media item may result in minimum excess resource usage.

Furthermore, given that, in some instances, a media item may be scheduled to play but never actually be played, computer resource usage may be optimized by delaying the generation of media content for the media item, thereby reducing the number of instances in which media content for a media item is generated but then never played. At the same time, however, to ensure a sense of continuity and smooth transition during media playback, it may be advantageous to generate the media content prior to the time that it is to be played. Thus, as illustrated by at least FIG. 4, aspects of the present disclosure enable a media playback system to delay media content generation (thereby optimizing computer resource usage) while also ensuring that the media content is available to play when required (thereby ensuring continuous media playback and gap-free transitions between media content).

FIG. 5 is a flowchart of an example method 220 for, among other things, determining media item identifiers, interfacing with a client device, and generating a manifest file. Operations of FIG. 5 are described as being performed by the backend platform 104. However, in some embodiments, one or more of the operations of FIG. 5 may be performed by one or more other components.

At operation 222, the backend platform 104 may receive a request to play a media item. For example, the backend platform 104 may receive a request to play sequence of media items. In some embodiments, the sequence of media items may include a generatable media item, which may be a media item that has been or can be generated. In some embodiments, the request to play a sequence of media items is a request to play a playlist and may include a playlist identifier that is later mapped to a request to use a DJ feature.

The request to play a sequence of media items may include various information. For example, the request may include an identifier of a user that sent the request. Based in part on the identifier, the backend platform 104 may select one or more recommended items to include in the sequence of media items. As another example, the request may include an indication of a type of media item requested. For instance, the user may provide a request to play a predefined playlist of songs, or the user may provide a request for songs with certain musical characteristics, such as songs belonging to a particular genre.

In some embodiments, the request may include information about a media playback device that is to play the sequence of media items. From such information, the backend platform 104 may determine compatibility information for the media playback device. For example, the request may include information about the device's speakers, whether the device includes a screen, the available run-time memory and disk storage on the device, network connectivity strength of the device, a software version of an application on the device, or other information about the device. As another example, the request may include contextual information, such as a location of the media playback device or a time or date at which the request was submitted. As another example, the request may include one or more parameters related to generating the generatable media item. Such parameters may include, for example, a voice characteristic to use when synthesizing audio.

At operation 224, the backend platform 104 may determine media items for the sequence of media items and media item identifiers for the media items in the sequence of media items. For example, in response to receiving the request, the backend platform 104 may select one or more media items to include in the sequence of media items. To do so, the backend platform 104 may, in some embodiments, use information provided in the request. For example, the backend platform 104 may identify a user that sent the request and then use a recommendation engine to select media items based in part on the user's preferences. Furthermore, the backend platform 104 may include a different type of media content in the sequence of media items. For example, the backend platform 104 may select a plurality of music items and one or more generatable narration media items that relate to the plurality of music items. In some embodiments, the narration media items include text that relate to the plurality of music items, and the text may be converted to speech that may be output by a media playback device. In some embodiments, a narration can be an image or an audio-visual media item.

As part of determining the media items for the sequence of media items, the backend platform 104 may generate or retrieve a media item identifier for each of the media items in the sequence of media items. In some embodiments, the media item identifier is an alphanumeric string that includes information about the media item or that, when used, enables a program to access information about the media item. For example, the media item identifier may include encoded information about the media item that may be decoded by a component of the backend platform 104 or another computing system.

At operation 226, the backend platform 104 may provide the media item identifiers for the sequence of media items to the media playback device 102. In some embodiments, the backend platform 104 may control the timing at which the media items are played by the media playback device 102. In such embodiments, the backend platform 104 may provide a media item identifier to the media playback device 102 based on the time that the media item is to be retrieved and played by the media playback device 102. In some embodiments, however, the media item identifiers may be stored at a component of the backend platform 104 that is communicatively coupled with the media playback device 102, and it may be a responsibility of this backend component to resolve media item identifiers into playable media content.

At operation 228, the backend platform 104 may receive a request for a manifest file. For example, the backend platform 104 may receive, from the media playback device 102, a manifest file request that includes a media item identifier. In some embodiments, however, the request to generate a manifest file may be triggered by a component of the backend platform 104.

At operation 230, the backend platform 104 may generate a URL for the manifest file. To do so, the backend platform 104 may use a component that is configured to generate URLs that correspond to locations of media content. The URL may be generated based at least in part on data from the media item identifier of the manifest file request. Furthermore, the URL may be based at least in part on the characteristics of the media playback device sent in the manifest file request.

Furthermore, as part of generating the URL, the backend platform 104 may also determine an expiration time of the URL (e.g., based on a predetermined expiration time or based on an application-specific expiration time). In some embodiments, the expiration time of the URL may depend at least in part on whether the URL is encrypted (e.g., if the URL is unencrypted, then the expiration time may be shorter, and vice-versa). Additionally, the backend platform 104 may sign the URL. To do so, the backend platform 104 may, in some embodiments, use a private key. By signing the URL, a downstream system, such as the CDN 106, may verify that the URL is, in fact, generated by the backend platform 104 and that the URL is not altered.

Additionally, in some embodiments, the backend platform 104 may generate an estimated latency time to generate the media content using the URL and generate an estimated size of the media content accessible using the URL. Furthermore, the backend platform 104 may ensure that the generated URL is associated with media content that is playable by the media playback device 102 based, for example, on the characteristics of the media playback device 102. As described above, the backend platform 104 may also generate a plurality of URLs associated with different media content for the media item.

At operation 232, the backend platform 104 may generate the manifest file. For example, the backend platform 104 may create a structured data object that includes, in some embodiments, one or more URLs, an estimated latency to generate the media content, an estimated media content size, and a file format for the media content.

At operation 234, the backend platform 104 may provide the manifest file to the media playback device 102.

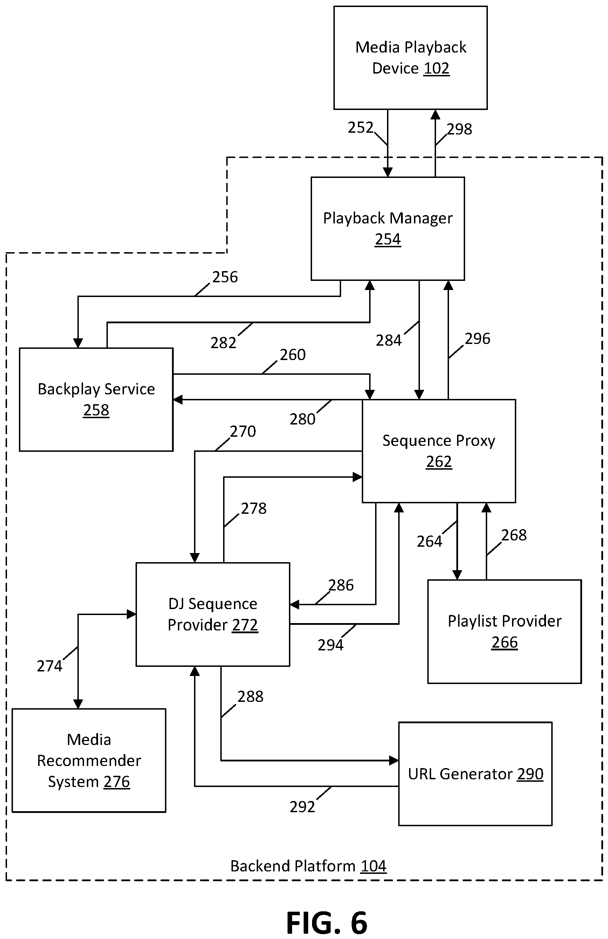

FIG. 6 illustrates an example architecture of the backend platform 104 and example operations for performing aspects of the operations described above in connection with FIG. 5. In the example of FIG. 6, the backend platform 104 is illustrated as handling a request to play a sequence of media items. Specifically, in the example of FIG. 6, the backend platform is illustrated as handling a request to play a DJ application feature, which may include a sequence of media items that includes a narration media item that narrates one or more other media items in the sequence of media items. However, components and operations of FIG. 6 may also, in some instances, be used for a request to play a single media item or for a request to play a sequence of media items (e.g., a playlist) that is unrelated to a DJ feature.

In the example of FIG. 6, the backend platform 104 includes a playback manager 254, a backplay service 258, a sequence proxy 262, a playlist provider 266, a DJ sequence provider 272, a media recommender system 276, and a URL generator 290. In some embodiments, at least some components illustrated in FIG. 6 may not be part of the backend platform 104, but rather may be part of a client device or a client-side application (e.g., the client application 103). For example, in some embodiments, one or more of the playback manager 254 or the backplay service 258 may be part of a client device or client application. For example, when the client is a smartphone or a computer communicatively coupled with the backend platform 104, then the playback manager 254 or the backplay service 258 may be part of a client-side application.

The playback manager 254 may be an interface for interacting with client devices. In some embodiments, the playback manager 254 may receive requests from client devices and may provide data to client devices so that the client devices may play media files. In some embodiments, the playback manager 254 may control the timing of playing media items. For example, the playback manager 254 may, in some instances, provide a media item identifier to a client device only after determining that it is time to play the media item.

In the example shown, the playback manager 254 may receive, at the operation 252, a request to play a sequence of media items that includes a narration media item related to one or more of the other media items. In some embodiments, upon receiving the playback request, the playback manager 254 may map the request to a context identifier, which may be a command or identifier that may be processed by other components of the backend platform 104. If the playback request relates to a DJ feature, then the playback manager 254 may map the request to a context identifier associated with the DJ feature. In some embodiments, the context identifier is associated with a playlist. In some embodiments, the request is mapped to the context identifier prior to being received by the playback manager 254, and the context identifier may be opaque to the playback manager 254.

At operation 256, the playback manager 254 may provide the context identifier to the backplay service 258. The playback manager 254 may further provide a command to the backplay service 258 to convert the context identifier into a sequence of media item identifiers corresponding to media items that are to be played.

The backplay service 258 may be a service that applies business logic in the backend platform 104. The backplay service 258 may be configured to receive commands from the playback manager 254 and to return a sequence of media items (or media item identifiers) to the playback manager 254. The context identifier received form the playback manager 254 may be opaque to the backplay service 258. To resolve it into a list of playable media items, the backplay service may provide the context identifier to the sequence proxy 262.

At operation 260, the backplay service 258 may provide the context identifier to the sequence proxy 262.

The sequence proxy 262 may interface with the playback manager 254 and the backplay service 258 and facilitate the resolution of context identifiers into playable media items. Furthermore, the sequence proxy 262 may be a router that, based on the content of the context identifier, selects a backend component for resolving the context identifier. For example, the sequence proxy 262 may include a routing table that maps the context identifier to a backend component configured to resolve the context identifier. In some embodiments, the sequence proxy 262 inspects only a part (e.g., a prefix) of the context identifier to select a backend component. In the example of FIG. 6, the sequence proxy 262 may determine that the context identifier received from the backplay service 258 relates to a playlist (e.g., a sequence of media items), and the sequence proxy 262 may select the playlist provider 266 as the component to which to route the context identifier.

At operation 264, the sequence proxy 262 may provide the context identifier to the playlist provider 266.

The playlist provider 266 may be configured to receive context identifiers for a plurality of playlist types. In some embodiments, the playlist types may include, for example, a playlist that includes a narration (e.g., a playlist associated with a DJ feature), a user-defined playlist, an editorial playlist, or a user-specific recommended playlist. In some embodiments, the playlist provider 266 may be configured to resolve the context identifier and return a sequence of media item identifiers to the sequence proxy 262. In the example shown, however, the playlist provider 266 may inspect the context identifier and determine that it relates to a DJ feature, which the playlist provider 266 may not be configured to directly resolve. Based in part on the context identifier, the playlist provider 266 may generate a DJ-specific context identifier.

At operation 268, the playlist provider 266 may provide the DJ-specific context identifier to the sequence proxy 262. The sequence proxy 262 may inspect the DJ-specific context identifier and, based on a routing table, select the DJ sequence provider 272 to resolve the DJ-specific context identifier. In some embodiments, rather than receiving the DJ-specific context identifier from the playlist provider 266, the sequence proxy 262 may receive the DJ-specific context identifier from the backplay service 258, and then provide it to the DJ sequence provider 272, thereby eliminating the use of the playlist provider 266 as part of resolving requests to use a DJ feature.

At operation 270, the sequence proxy 262 may provide the DJ-specific context identifier to the DJ sequence provider 272.

The DJ sequence provider 272 may be configured to generate a sequence of media items. The sequence of media items may include different types of media items. For example, the media items may include one or more audio tracks (e.g., songs) and one or more narrations about the audio tracks. In some embodiments, the DJ sequence provider 272 is used specifically to generate a sequence of media items to play for a DJ feature. As an example, in response to a request to use a DJ feature, the DJ sequence provider 272 may generate an introduction narration followed by three to five audio items followed by an outro narration. Other permutations are also possible, such as including more or fewer narrations, including more or fewer audio items, or changing the order of narrations and audio items.

At operation 274, the DJ sequence provider 272 may select some media items to include in the sequence of media items. To do so, the DJ sequence provider 272 may use the media recommender system 276. For example, the DJ sequence provider 272 may receive information related to the user, controller device or media playback device, or context of the request. The DJ sequence provider 272 may select some of that information and provide it to the media recommender system 276. The DJ sequence provider 272 may further include other information in the request, such as a number of media items to recommend. In the example shown, the media recommender system 276 may return one or more media item identifiers to the DJ sequence provider 272.

For each narration, the DJ sequence provider 272 may generate text. To do so, the DJ sequence provider 272 may, in some embodiments, use information related to the media items returned by the media recommender system 276 or use information received from a client device as part of a request to use a DJ feature. In some embodiments, the DJ sequence provider 272 may use a generative language model to generate a narration. For example, the DJ sequence provider 272 may input a prompt and one or more of data related to the recommended items or the request data to a generative language model. The prompt may include a request to generate a narration. The language model may output the narration. In some embodiments, the DJ sequence provider 272 may use one or more predefined templates to generate text for narrations. In some embodiments, to generate a narration, the DJ sequence provider 272 may consider a place of the narration within the ordered sequence of the plurality of media items (e.g., whether the narration is the first item, whether the narration is in the middle of the sequence of items, or whether the narration is at the end). In some embodiments, to generate a narration, the DJ sequence provider 272 may only consider the media items that are before and after the narration in the sequence of media items.

After determining the narration text, the DJ sequence provider 272 may, in some embodiments, encode the narration text and include the encoded narration text as part of an identifier for the narration media item. The DJ sequence provider 272 may then assemble a sequence of identifiers for the sequence of media items. Some of the media item identifiers (e.g., for recommended media items) may be based on data received from the media recommender system, whereas some of the media item identifiers (e.g., for narrations) may be generated by the DJ sequence provider 272 after determining text for the narrations.

At operation 278, the DJ sequence provider may provide the sequence of media item identifiers for the requested sequence of media items to the sequence proxy 262.

At operation 280, the sequence proxy 262 may provide the sequence of media item identifiers to the backplay service 258. In some embodiments, the backplay service 258 may convert the sequence of media items into a structured data format (e.g., a state machine) that can be used by the playback manager 254.

At operation 282, the backplay service 258 provides the sequence of media item identifiers to the playback manager 254. In some embodiments, the playback manager 254 may then provide one or more of the media item identifiers to the media playback device 102. In some embodiments, the playback manager 254 may determine whether a client device is configured to resolve (e.g., play or retrieve media content to play) each of the media item identifiers of the sequence of media item identifiers. In some embodiments, the playback manager 254 determines that the media item identifiers for the narration media items (e.g., which may include encoded narration text) cannot be resolved by a downstream system. As a result, the playback manager 254 may request that the sequence proxy 262 convert the media item identifiers for the narration media items into data that can be handled by a downstream system.

To make such a request, the playback manager 254 may generate a manifest file request, which may include a format identifier, a media identifier, and client device information. In some embodiments, the format identifier may indicate that the request is to be resolved by the DJ sequence provider. The media identifier may include an encoded representation of the narration text. The client device information may include information about the playback device that is to render or play media content associated with the sequence of media item identifiers. An example manifest file request is illustrated in FIG. 3.

At operation 284, the playback manager 254 may provide the manifest file request to the sequence proxy 262. Although the playback manager 254 may provide a plurality of manifest file requests for a plurality of narration media items, the operations 284-296 are described for a single narration media item. At operation 286, the sequence proxy 262 may route-based, for example, on the format identifier-the manifest file request to the DJ sequence provider 272.

At operation 288, the DJ sequence provider 272 may submit the media item identifier to the URL generator 290 with a request to generate a URL associated with the media item identifier. In some embodiments, the DJ sequence provider 272 may extract the encoded narration text from the media identifier and provide the narration text to the URL generator 290. Furthermore, in some embodiments, the DJ sequence provider 272 may provide at least some of the client device information to the URL generator 290.

The URL generator 290 may be configured to receive narration text from the DJ sequence provider 272 and to generate a URL. The URL may be a media item identifier for the narration media item that may be used by a downstream system to retrieve media content (e.g., synthesized speech) for the narration. In some embodiments, the URL may include the narration text as a parameter. Other URL parameters may include the language of the text, a date, a language, a time, a selected DJ voice, or another parameter that may be used as part of synthesizing the narration text. In some embodiments, one or more of the domain or path of the URL may be associated with the CDN 106. In some embodiments, a more general URI may be generated rather than a URL.

In some embodiments, the URL generator 290 may sign the URL. To do so, the URL generator 290 may use a secret key to which only the URL generator 290 has access. By signing the URL, downstream systems, such as the playback manager 254 or the CDN 106 may verify that the URL is, in fact, generated by the URL generator 290. Furthermore, signing the URL may, in some embodiments, ensure that the URL may not be altered. In some embodiments, the signed URL is associated with an expiration time (e.g., a timestamp for 1 minute, 5 minutes, 15 minutes, or another amount of time after which the URL is signed). After the expiration time, the signature may expire and render the URL unusable.

In some embodiments, the URL generator 290 may account for the client device information as part of generating a URL by generating a URL that is associated with media content playable by the client device. For example, if the client device is configured to play data in an MP3 format but not a WAV format, then the URL generator 290 may generate a URL that points to an MP3 file and not a WAV file. As another example, if the client device has limited run-time memory or a poor network connection, then the URL generator 290 may generate a URL for a lower resolution version of a media item rather than a higher resolution or standard version of the media item.

In some embodiments, the URL generator 290 may generate a plurality of URLs for one narration media item. For example, the URL generator 290 may generate a first URL for a high quality (e.g., high fidelity or high resolution) version of a media item and a second URL for a low quality (e.g., low fidelity or low resolution) version of the media item. In such embodiments, the playback manager 254 or a component of the client application 103 may select from among the provided URLs to retrieve the media content depending, for example, on the network connectivity (e.g., whether connected to the internet via Wi-Fi or cellular data) or another condition related to the client device or the context in which the client device operates.

At operation 292, the URL generator 290 may provide the one or more signed URLs for the narration media item to the DJ sequence provider 272.

The DJ sequence provider 272 may then generate a manifest file for the narration media item. The manifest file may include a signed URL, an expiration timestamp of the URL, a format of the media item, a latency for generating the media item, a size of the media item, and other data related to the media item. The latency for generating the media item may be an estimated value for how long it will take to synthesize the narration text into audio data that may be played. In some embodiments, there may be a range of latency times, such as a lower estimate and a higher estimate. An example manifest file is illustrated below in connection with FIG. 3.

At operation 294, the DJ sequence provider 272 may provide the manifest file to the sequence proxy 262, and at operation 296, the sequence proxy 262 may provide the manifest file to the playback manager 254. Once the playback manager 254 receives the manifest file, then the playback manager 254 may have the information needed for the client application 103 to resolve the generatable media items (e.g., the narration media items) and the other media items in the sequence of media items. At operation 298, the playback manager 254 may provide a manifest file to the media playback device 102.

FIG. 7 is a flowchart of a method 310 for, among other things, receiving a request for media content and retrieving or generating the requested media content. Operations of FIG. 7 are described as being performed by the CDN 106 and the media content generator 108. Specifically, one or more of the operations of FIG. 7 may be performed by a program on one or more servers that are part of the CDN 106. However, one or more operations of the method 310 may be performed by one or more other components. The example of FIG. 7 is described as performed for a single media item. As will be understood by one having skill in the art, aspects of method 310 may be performed for a plurality of media items, including for a plurality of media items that make up a sequence of media items.

At operation 312, the CDN 106 may receive a request for media content from the media playback device 102. For example, an endpoint of the CDN 106 may receive an HTTP GET request from the media playback device 102, which may use the URL of a manifest file for the media item to access the CDN 106. In some embodiments the CDN 106 may receive the request for media content from an application that routes the request from the media playback device 102 to the CDN 106.

At operation 314, the CDN 106 may determine whether the URL used by the media playback device 102 to access the CDN 106 is signed. For example, the CDN 106 may determine whether the URL is signed by the backend platform 104. To determine whether the URL is signed, the CDN 106 may, in some embodiments, apply a public key associated with the backend platform 104 to determine whether the URL was properly signed with a corresponding private key associated with the backend platform 104. By doing so, the CDN 106 may determine whether the URL was altered or whether it was generated by a program different from the backend platform 104. In response to determining that the URL is not signed (e.g., taking the "NO" branch), the CDN 106 may reject the request for media content (e.g., proceeding to the operation 315). In response to determining that the URL is signed (e.g., taking the "YES" branch), the CDN 106 may proceed to the operation 316.

At operation 316, the CDN 106 may identify the requested media content from the request. To do so, the CDN 106 may parse parameters of the request to determine the requested media content. For example, the CDN 106 may determine an identifier for the requested media content. For instance, if the media content is a pre-recorded audio track (e.g., a music track or a podcast), then the CDN 106 may determine an identifier that is usable to retrieve the pre-recorded audio track from a database. In some embodiments, the CDN 106 may identify the media content by determining a hierarchy of identifiers (e.g., first a media content type, followed by a unique name, followed by version). As another example, for generatable media content, the CDN 106 may determine a type of the media content (e.g., synthesize audio, generated text, generated images, etc.) and one or more parameters that may be used as part of generating the media content (e.g., a style, quality, or other characteristic of the generatable media content). In the example of FIG. 7, the requested media content is generatable media content.

At operation 318, the CDN 106 may determine whether the media content is cached. For instance, for generatable media content, the media content may have previously been generated. For example, the user of the media playback device or a user of a different media playback device may have previously requested the media content (or similar media content), and in response, the CDN 106 may have generated the media content and stored it in a cache. In response to determining that the media content is cached (e.g., taking the "YES" branch), the CDN 106 may select the cached media content and proceed to the operation 322. In response to determining that the media content is not cached (e.g., taking the "NO" branch"), the CDN 106 may proceed to the operation 320.

At operation 320, the CDN 106 may generate the media content using the media content generator 108. In some embodiments, the CDN 106 may be coupled with a plurality of media content generators, and the selected media content generator 108 may depend in part on the media content that is to be generated. The CDN 106 may provide data related to generating the media content to the media content generator 108, such as data received in the request from the media playback device 102. In some embodiments, data received from the CDN 106 may be used as inputs to a machine learning model of the media content generator 108 to generate the media content.

As an example, the media content may be a synthesized speech track, and the request from the media playback device 102 may include the narration text. Furthermore, the request from the CDN 106 to the media content generator may include parameters regarding how the text is to be synthesized. The parameters may include, for example, a language, an audio quality, a file type, a selected voice, or one or more characteristics of the voice to be used, such as a mood, accent, pace, pitch, or other vocal characteristic.

At operation 322, the CDN 106 may provide the media content to the media playback device 102. In some embodiments, the CDN 106 may stream the media content to the media playback device 102. In some embodiments, the media playback device 102 may download the media content from the CDN 106. In some embodiments, the media content may include more media content than the media content received from the media content generator 108. For example, the CDN 106 may provide additional media data retrieved from a database or cache of the CDN 106, such as audio data, image data, or text data.

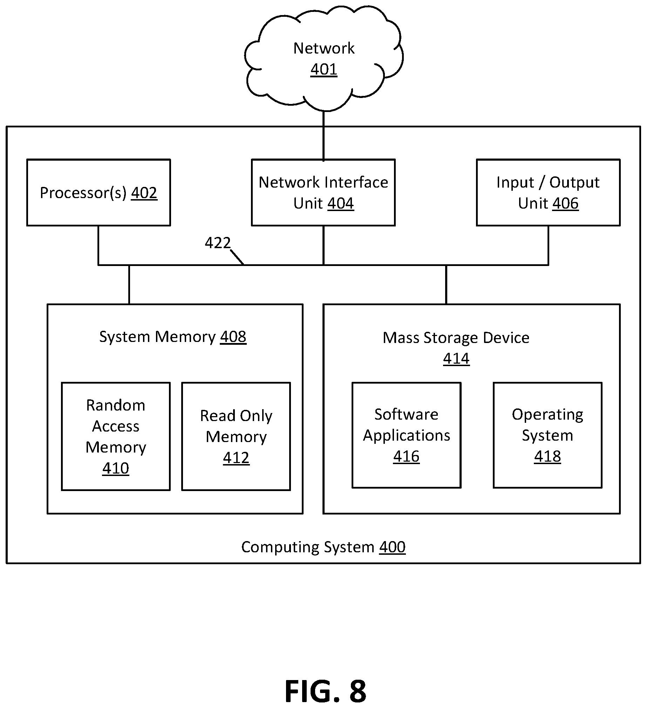

FIG. 8 illustrates an example block diagram of a virtual or physical computing system 400. One or more aspects of the computing system 400 can be used to implement the system, components, and processes described herein.

In the embodiment shown, the computing system 400 includes one or more processors 402, a system memory 408, and a system bus 422 that couples the system memory 408 to the one or more processors 402. The system memory 408 includes RAM (Random Access Memory) 410 and ROM (Read-Only Memory) 412. A basic input/output system that contains the basic routines that help to transfer information between elements within the computing system 400, such as during startup, is stored in the ROM 412. The computing system 400 further includes a mass storage device 414. The mass storage device 414 is able to store software instructions and data. The one or more processors 402 can be one or more central processing units or other processors.

The mass storage device 414 is connected to the one or more processors 402 through a mass storage controller (not shown) connected to the system bus 422. The mass storage device 414 and its associated computer-readable data storage media provide non-volatile, non-transitory storage for the computing system 400. Although the description of computer-readable data storage media contained herein refers to a mass storage device, such as a hard disk or solid-state disk, it should be appreciated by those skilled in the art that computer-readable data storage media can be any available non-transitory, physical device or article of manufacture from which the central display station can read data and/or instructions.

Computer-readable data storage media include volatile and non-volatile, removable and non-removable media implemented in any method or technology for storage of information such as computer-readable software instructions, data structures, program modules or other data. Example types of computer-readable data storage media include, but are not limited to, RAM, ROM, EPROM, EEPROM, flash memory or other solid state memory technology, CD-ROMs, DVD (Digital Versatile Discs), other optical storage media, magnetic cassettes, magnetic tape, magnetic disk storage or other magnetic storage devices, or any other medium which can be used to store the desired information and which can be accessed by the computing system 400.

According to various embodiments of the invention, the computing system 400 may operate in a networked environment using logical connections to remote network devices through the network 401. The network 401 is a computer network, such as an enterprise intranet and/or the Internet. The network 401 can include a LAN, a Wide Area Network (WAN), the internet, wireless transmission mediums, wired transmission mediums, other networks, and combinations thereof. The computing system 400 may connect to the network 401 through a network interface unit 404 connected to the system bus 422. It should be appreciated that the network interface unit 404 may also be utilized to connect to other types of networks and remote computing systems. The computing system 400 also includes an input/output controller 406 for receiving and processing input from a number of other devices, including a touch user interface display screen, or another type of input device. Similarly, the input/output controller 406 may provide output to a touch user interface display screen or other type of output device.

As mentioned briefly above, the mass storage device 414 and the RAM 410 of the computing system 400 can store software instructions and data. The software instructions include an operating system 418 suitable for controlling the operation of the computing system 400. The mass storage device 414 and/or the RAM 410 also store software instructions, that when executed by the one or more processors 402, cause one or more of the systems, devices, or components described herein to provide functionality described herein. For example, the mass storage device 414 and/or the RAM 410 can store software instructions that, when executed by the one or more processors 402, cause the computing system 400 to receive and execute managing network access control and build system processes.

Aspects of the present disclosure provide various technical benefits. For example, aspects of the present disclosure enable a media service provider to optimize computing resource usage by delaying generation of media items, while still generating media items prior to a time that they are to be played. In some embodiments, such precise timing may be enabled by performing a computationally cheap operation of generating a manifest file for a media item to determine a URL for generating the media content and a latency time to generate the media content.

Thus, not only may generated media content be integrated into a media service application (e.g., played as part of a sequence of media items), but this integration may be performed in a manner that reduces the computational costs required to generate media content and in a manner that provides a smooth transition to and from generated media content. Additionally, by implementing signed URLs and expiration times, aspects of the present disclosure may be implemented in a distributed system with many client devices while still providing security for a media content generation system, thereby reducing the risk of unauthorized use of the media content generation system. As will be understood by those having skill in the art, these are only some of the advantages provided by aspects of the present disclosure.

According to certain examples, there is also disclosed:
Example 1. A method for generating media content, the method comprising: sending a request to generate a manifest file associated with a media item; at a first time, receiving the manifest file associated with the media item, the manifest file including a uniform resource locator associated with media content for the media item and a latency to generate the media content; determining a second time based at least in part on the latency to generate the media content; at the second time, using the uniform resource locator to request the media content from a content distribution network; receiving, from the content distribution network, the media content; and playing the media content using a media playback device.
Example 2. The method of example 1, wherein the media content is synthesized audio; wherein the uniform resource locator includes text to be spoken; and wherein the content distribution network provides the text to be spoken to a text-to-speech generator configured to generate the synthesized audio based on the text to be spoken.
Example 3. The method of example 1, wherein the media content is a video.
Example 4. The method of any preceding example, wherein the manifest file further includes an expiration time for the uniform resource locator; wherein the method further comprises: determining, based on the expiration time of the uniform resource locator, whether the uniform resource locator is valid; in response to determining that the uniform resource locator is valid, providing, at the second time, the uniform resource locator to the content distribution network; and in response to determining that the uniform resource locator is not valid, sending a second request to refresh the manifest file associated with the media content.
Example 5. The method of any preceding example, wherein determining the second time comprises: determining a time to play the media content; determining a buffer time; subtracting, from the time to play the media item, the buffer time and the latency to generate the media content.
Example 6. The method of any preceding example, wherein the request to generate the manifest file associated with the media item includes a media item identifier and a characteristic of the media playback device.
Example 7. The method of example 6, wherein the characteristic of the media playback device comprises a file format playable by the media playback device; and wherein the uniform resource locator is generated based at least in part on the file format playable by the media playback device.
Example 8. The method of example 6 or 7, wherein the characteristic of the media playback device further comprises one or more of a playable bit rate, a playable sample rate, or a screen size.
Example 9. The method of any of examples 6 to 8, wherein the uniform resource locator is generated based at least in part on the media item identifier.
Example 10. The method of any preceding example, wherein the uniform resource locator is signed; and wherein the content distribution network is configured to verify that the uniform resource locator is signed.
Example 11. The method of any preceding example, wherein the manifest file includes a plurality of uniform resource locators, wherein each uniform resource locator of the plurality of uniform resource locators is associated with different media content for the media item; and wherein the method further comprises selecting the uniform resource locator from the plurality of uniform resource locators based on a network connection or a media content quality.
Example 12. The method of any preceding example, wherein the latency to generate the media content comprises a latency upper bound and a latency lower bound.
Example 13. The method of any preceding example, wherein the media item belongs to a sequence of media items, the sequence of media items including a music track; and wherein the media content for the media item is a narration related to at least the music track.
Example 14. The method of any preceding example, wherein the media content is streamed from the content distribution network to the media playback device.
Example 15. A system for generating media content, the system comprising: a backend platform; a media playback device; and a content distribution network; wherein the media playback device is configured to: send a request to the backend platform to generate a manifest file associated with a media item; at a first time, receive, from the backend platform, the manifest file associated with the media item, the manifest file including a uniform resource locator associated with media content for the media item and a latency to generate the media content; determine a second time based at least in part on the latency to generate the media content; at the second time, use the uniform resource locator to request the media content from the content distribution network; receive, from the content distribution network, the media content; and play the media content using a media playback device.
Example 16. The system of example 15, further comprising a controller device different from the media playback device; wherein the backend platform is configured to: receive, from the controller device, a request to play a sequence of media items; and in response to receiving the request to play the sequence of media items, select the media item as part of the sequence of media items.
Example 17. The system of example 15 or 16, further comprising a media content generator communicatively coupled with the content distribution network; wherein the media content generator is configured to generate synthesized audio as the media content.
Example 18. The system of any of examples 15 to 17, wherein the backend platform includes a uniform resource locator generator configured to generate the uniform resource locator based at least in part on a playback characteristic of the media playback device.
Example 19. A media playback device comprising: a processor; and memory storing instructions that, when executed by the processor, cause the media playback device to: receive a sequence of media items including a generatable media item; at a first time, send a request to generate a manifest file associated with the generatable media item; receive the manifest file associated with the generatable media item, the manifest file including a uniform resource locator associated with media content for the generatable media item and a latency to generate the media content; determine a second time based at least in part on the latency to generate the media content; at the second time, use the uniform resource locator to request the media content from a content distribution network; receive, from the content distribution network, the media content; and output the media content.
Example 20. The media playback device of example 19, wherein the sequence of media items includes a plurality of pre-recorded audio tracks; and wherein the media content is synthesized speech that relates to the plurality of pre-recorded audio tracks.

While particular uses of the technology have been illustrated and discussed above, the disclosed technology can be used with a variety of data structures and processes in accordance with many examples of the technology. The above discussion is not meant to suggest that the disclosed technology is only suitable for implementation with the components and operations shown and described above.

This disclosure described some aspects of the present technology with reference to the accompanying drawings, in which only some of the possible aspects were shown. Other aspects can, however, be embodied in different forms and should not be construed as limited to the aspects set forth herein. Rather, these aspects were provided so that this disclosure was thorough and complete and fully conveyed the scope of the possible aspects to those skilled in the art.

As should be appreciated, the various aspects (e.g., operations, memory arrangements, etc.) described with respect to the figures herein are not intended to limit the technology to the particular aspects described. Accordingly, additional configurations can be used to practice the technology herein and some aspects described can be excluded without departing from the methods and systems disclosed herein.

Similarly, where operations of a process are disclosed, those operations are described for purposes of illustrating the present technology and are not intended to limit the disclosure to a particular sequence of operations. For example, the operations can be performed in differing order, two or more operations can be performed concurrently, additional operations can be performed, and disclosed operations can be excluded without departing from the present disclosure. Further, each operation can be accomplished via one or more sub-operations. The disclosed processes can be repeated.

Although specific aspects were described herein, the scope of the technology is not limited to those specific aspects. One skilled in the art will recognize other aspects or improvements that are within the scope of the present technology. Therefore, the specific structure, acts, or media are disclosed only as illustrative aspects. The scope of the technology is defined by the following claims and any equivalents therein.

## Claims

1. A method for generating media content, the method comprising:
sending a request to generate a manifest file associated with a media item;
at a first time, receiving the manifest file associated with the media item, the manifest file including a uniform resource locator associated with media content for the media item and a latency to generate the media content;
determining a second time based at least in part on the latency to generate the media content;
at the second time, using the uniform resource locator to request the media content from a content distribution network;
receiving, from the content distribution network, the media content; and
playing the media content using a media playback device.

2. The method of claim 1,
wherein the media content is synthesized audio;
wherein the uniform resource locator includes text to be spoken; and
wherein the content distribution network provides the text to be spoken to a text-to-speech generator configured to generate the synthesized audio based on the text to be spoken.

3. The method of any preceding claim,
wherein the manifest file further includes an expiration time for the uniform resource locator;
wherein the method further comprises:
determining, based on the expiration time of the uniform resource locator, whether the uniform resource locator is valid;
in response to determining that the uniform resource locator is valid, providing, at the second time, the uniform resource locator to the content distribution network; and
in response to determining that the uniform resource locator is not valid, sending a second request to refresh the manifest file associated with the media content.

4. The method of any preceding claim, wherein determining the second time comprises:
determining a time to play the media content;
determining a buffer time;
subtracting, from the time to play the media item, the buffer time and the latency to generate the media content.

5. The method of any preceding claim, wherein the request to generate the manifest file associated with the media item includes a media item identifier and a characteristic of the media playback device.

6. The method of claim 5,
wherein the characteristic of the media playback device comprises a file format playable by the media playback device; and
wherein the uniform resource locator is generated based at least in part on the file format playable by the media playback device.

7. The method of claim 5 or 6, wherein the characteristic of the media playback device further comprises one or more of a playable bit rate, a playable sample rate, or a screen size.

8. The method of any preceding claim,
wherein the manifest file includes a plurality of uniform resource locators, wherein each uniform resource locator of the plurality of uniform resource locators is associated with different media content for the media item; and
wherein the method further comprises selecting the uniform resource locator from the plurality of uniform resource locators based on a network connection or a media content quality.

9. The method of any preceding claim, wherein the latency to generate the media content comprises a latency upper bound and a latency lower bound.

10. The method of any preceding claim,
wherein the media item belongs to a sequence of media items, the sequence of media items including a music track; and
wherein the media content for the media item is a narration related to at least the music track.

11. A system for generating media content, the system comprising:
a backend platform;
a media playback device; and
a content distribution network;
wherein the media playback device is configured to:
send a request to the backend platform to generate a manifest file associated with a media item;
at a first time, receive, from the backend platform, the manifest file associated with the media item, the manifest file including a uniform resource locator associated with media content for the media item and a latency to generate the media content;
determine a second time based at least in part on the latency to generate the media content;
at the second time, use the uniform resource locator to request the media content from the content distribution network;
receive, from the content distribution network, the media content; and
play the media content using a media playback device.

12. The system of claim 11,
further comprising a controller device different from the media playback device;
wherein the backend platform is configured to:
receive, from the controller device, a request to play a sequence of media items; and
in response to receiving the request to play the sequence of media items, select the media item as part of the sequence of media items.

13. The system of claim 11 or 12,
further comprising a media content generator communicatively coupled with the content distribution network;
wherein the media content generator is configured to generate synthesized audio as the media content.

14. The system of any of claims 11 to 13, wherein the backend platform includes a uniform resource locator generator configured to generate the uniform resource locator based at least in part on a playback characteristic of the media playback device.

15. A media playback device comprising:
a processor; and
memory storing instructions that, when executed by the processor, cause the media playback device to:
receive a sequence of media items including a generatable media item;
at a first time, send a request to generate a manifest file associated with the generatable media item;
receive the manifest file associated with the generatable media item, the manifest file including a uniform resource locator associated with media content for the generatable media item and a latency to generate the media content;
determine a second time based at least in part on the latency to generate the media content;
at the second time, use the uniform resource locator to request the media content from a content distribution network;
receive, from the content distribution network, the media content; and
output the media content.
